# EUROPEAN PATENT APPLICATION

(11) **EP 4 755 523 A1**
(43) Date of publication of application: **10.06.2026**
(21) Application number: 23949624.3
(22) Date of filing: 22.12.2023
(51) Int. Cl.: B05C 5/02

(54) **COATING SYSTEM AND METHOD**

(30) Priority: 18.08.2023 CN 202311044619
(71) Applicant: Contemporary Amperex Technology Co., Limited, Ningde, Fujian 352100 (CN)
(72) Inventor: ZHEN, Zhihui, Ningde, Fujian 352100 (CN); ZHANG, Jingdong, Ningde, Fujian 352100 (CN); ZHAN, Bingyang, Ningde, Fujian 352100 (CN); WANG, Qiangjun, Ningde, Fujian 352100 (CN); CHEN, Weigang, Ningde, Fujian 352100 (CN)
(74) Representative: Gong, Jinping
(86) International application number: PCT/CN2023/140990
(87) International publication number: WO 2025/039446

(57) **Abstract**

A coating system and its corresponding coating method are disclosed and relate to the technical field of coating processes. The coating system includes: a coating die (01) and a detection apparatus (02). The coating die (01) includes a plurality of flow adjustment blocks (03), where the plurality of flow adjustment blocks (03) have a same dimension in a first direction; and the first direction is a conveying direction of a substrate (04) in the coating system; and a dimension of the flow adjustment block (03) in the first direction is equal to a dimension of a detection light spot projected by the detection apparatus (02) onto the substrate (04) in the first direction. The coating system facilitates partitioning of the substrate through the flow adjustment blocks, enabling matching between target coating zones and flow adjustment blocks, which thus allows for quick location of a region with a coating quality abnormality and correction of the coating quality by adjusting the corresponding flow adjustment block, improving the production efficiency of the coating process.

## Description

This application claims priority to Chinese Patent Application No. 202311044619.8, filed on August 18, 2023 and entitled "COATING SYSTEM AND COATING METHOD."

### TECHNICAL FIELD

This application relates to the technical field of coating processes, and in particular, to a coating system and a coating method.

### BACKGROUND

Current coating technologies predominantly employ slit extrusion coating, where slurry is transferred onto a substrate through a slit formed by a coating assembly. This coating technology is applied in various fields, such as the coating process in battery production.

In the coating process of battery production, the process from slurry deposition to stable coating is a dynamic process, and the coating slurry weight is influenced by multiple factors. Therefore, it is necessary to detect the coating weight. In the related art, when a coating weight abnormality is detected, it is not possible to locate the region with the weight abnormality, which is not conducive to guiding operators to quickly adjust the abnormal state, thereby affecting the production efficiency of the coating process.

The above statements are only intended to provide background information related to this application and do not necessarily constitute prior art.

### SUMMARY

In view of the above issues, embodiments of this application propose a coating system and a coating method capable of quickly locating a region with a coating quality abnormality when a quality abnormality exists in a target coating zone, thereby guiding the adjustment of slurry weight and improving the production efficiency of the coating process.

According to a first aspect, an embodiment of this application provides a coating system, where the coating system includes: a coating die, a detection apparatus, and a coating quality statistics apparatus. The coating die includes a plurality of flow adjustment blocks, where the plurality of flow adjustment blocks have a same dimension in a first direction, and the first direction is a conveying direction of a substrate in the coating system. The dimension of the flow adjustment block in the first direction is equal to a dimension of a detection light spot projected by the detection apparatus onto the substrate in the first direction. The coating quality statistics apparatus includes a statistics module, where the statistics module is configured to determine coating quality information of each target coating zone based on coating data of the target coating zone detected by the detection apparatus; the target coating zone includes at least one coating zone on the substrate, and the coating data includes a slurry weight in the target coating zone. The statistics module is further configured to obtain a coating weight deviation value of the target coating zone based on a preset target value and the slurry weight in each target coating zone; and to determine the coating quality information of the target coating zone based on the coating weight deviation value of the target coating zone; where the coating quality information includes a coating quality distribution map. The statistics module is further configured to determine, based on the coating weight deviation value corresponding to each target coating zone, marker information of characterizing the degree of coating weight deviation for each target coating zone, where different degrees of coating weight deviation correspond to different marker information; and to generate and display the coating quality distribution map based on the marker information corresponding to each target coating zone, where the coating quality distribution map includes each target coating zone annotated with the corresponding marker information.

The coating system according to the first aspect of the embodiment of this application can apply slurry onto a substrate through the coating die to form a coating layer. Since a plurality of flow adjustment blocks have a same dimension in the first direction, and the flow adjustment blocks can adjust the slurry coating flow at their corresponding positions on the substrate, a coating zone corresponding to each flow adjustment block can be obtained on the coating layer based on the position of each flow adjustment block, thereby obtaining a plurality of uniformly distributed coating zones. Moreover, since the dimension of each flow adjustment block in the first direction is equal to the dimension of the detection light spot in the first direction, each coating zone, each flow adjustment block, and each detection light spot share identical dimensions in the first direction. The statistics module is used to compile coating quality information of each target coating zone. Thus, when a coating quality abnormality is detected in any coating zone through the detection light spot, the corresponding flow adjustment block can be located based on the position of the abnormal coating zone, and the coating quality can be corrected by adjusting the corresponding flow adjustment block, thereby improving the production efficiency of the coating process.

In some embodiments, the coating die further includes: a feed inlet, a first die, a second die, and a gasket. A cavity is formed between the first die and the second die, and the gasket is disposed within the cavity. The plurality of flow adjustment blocks are arranged in an array on a side surface of the first die away from the second die, the first end of the flow adjustment block being in contact with the gasket. The feed inlet is in communication with the cavity.

The coating die provided in the embodiments of this application can achieve coating on the substrate by extruding slurry, where the first end of the flow adjustment block is in contact with the gasket, allowing force to be applied to the gasket to adjust the slit size at the gasket, thereby adjusting the thickness of the coating layer on the substrate. Thus, when there is an abnormality in the quality of the coating layer, the slit size can be adjusted by adjusting the flow adjustment block corresponding to the abnormal position to adjust the thickness of the coating layer.

In some embodiments, the coating die further includes flow adjustment mechanisms connected to the flow adjustment blocks. Each flow adjustment mechanism corresponds to a flow adjustment block, and the flow adjustment mechanism is connected to a second end of its corresponding flow adjustment block.

The coating die provided in the embodiments of this application can change the pressure applied by the flow adjustment block on the gasket through the flow adjustment mechanism. Thus, when there is an abnormality in the quality of the coating layer on the substrate, the pressure applied by the flow adjustment block on the gasket can be adjusted by adjusting the flow adjustment block corresponding to the abnormal position, achieving adjustment of the slit gap at the abnormal position, thereby controlling the slurry flow and enabling an increase or decrease in the coated slurry.

In some embodiments, the coating quality statistics apparatus includes a display module, where the display module is configured to display the coating quality information of the target coating zone.

The coating system provided in the embodiments of this application enables visualization of the coating quality of each coating zone on the substrate via the display module, facilitating refined monitoring of coating quality.

In some embodiments, the statistics module is further configured to determine a mapping position of each flow adjustment block on the substrate based on the position of each flow adjustment block of the coating die; and to divide the substrate into a plurality of target coating zones based on the mapping position of each flow adjustment block on the substrate and a dimension of each flow adjustment block in the first direction.

The coating system provided in the embodiments of this application can divide the substrate into a plurality of target coating zones based on the mapping position of each flow adjustment block on the substrate and the dimension of each flow adjustment block in the first direction, thereby obtaining target coating zones corresponding to the flow adjustment blocks.

In some embodiments, the statistics module is further configured to, at a first mapping position on the substrate corresponding to a first flow adjustment block, define a first target coating zone corresponding to the first flow adjustment block, a width of the first target coating zone being equal to the dimension of the flow adjustment block in the first direction, and a length of the first target coating zone being equal to the dimension of the substrate in a second direction; where the first flow adjustment block is any one of the flow adjustment blocks; and the second direction is a direction perpendicular to the first direction in the plane of the substrate.

The first target coating zone obtained by the embodiments of this application has a length equal to the dimension of the substrate in the second direction, such that the obtained target coating zone is a regular region with a width equal to the dimension of the flow adjustment block in the first direction and a length equal to the dimension of the substrate in the second direction, which is conducive not only to position matching between the target coating zone and the flow adjustment block, but also to the detection of coating data for each target coating zone.

According to a second aspect, a coating method is provided, applied to the coating system according to any one of the first aspect, where the method includes: dividing a substrate passing through the coating die into a plurality of target coating zones based on a preset rule; and determining coating quality information of each target coating zone based on detected coating data of each target coating zone.

In the coating method provided in embodiments of this application, the substrate passing through the coating die is divided into a plurality of target coating zones based on a preset rule, facilitating differentiation of coating quality in different regions and enabling partitioned control over the coating quality on the substrate. After the coating quality information of each target coating zone is determined based on the detected coating data of each target coating zone, when an abnormality exists in the coating quality of any target coating zone, the abnormal target coating zone can be correspondingly identified. This allows for quick location of the abnormal coating zone, guiding technicians to adjust the flow in the abnormal region, thereby improving the production efficiency of the coating process.

In some embodiments, the dividing the substrate passing through the coating die into a plurality of target coating zones based on a preset rule includes: dividing the substrate passing through the coating die into a plurality of target coating zones based on the position and the dimension in the first direction of each flow adjustment block.

In the coating method provided in the embodiments of this application, the substrate passing through the coating die is divided into a plurality of target coating zones based on the position and the dimension in the first direction of each flow adjustment block, which enables each target coating zone to have a mapping relationship with its corresponding flow adjustment block. After the coating quality information of each target coating zone is determined based on detected coating data of each target coating zone, when an abnormality exists in the coating quality of any target coating zone, a flow adjustment block corresponding to that zone can be determined according to the position of the target coating zone, thereby enabling quick location and flow adjustment of the abnormal coating zone and improving the production efficiency of the coating process.

In some embodiments, the dividing the substrate passing through the coating die into a plurality of target coating zones based on the position and the dimension in the first direction of the flow adjustment block includes: determining a mapping position of each flow adjustment block on the substrate based on the position of each flow adjustment block; and dividing the substrate into a plurality of target coating zones based on the mapping position of each flow adjustment block on the substrate and the dimension of each flow adjustment block in the first direction.

In the coating method provided in the embodiments of this application, the substrate can be divided into a plurality of target coating zones based on the mapping position of each flow adjustment block on the substrate and the dimension of each flow adjustment block in the first direction, thereby obtaining target coating zones corresponding to the flow adjustment blocks.

In some embodiments, the dividing the substrate into a plurality of target coating zones based on the mapping position of each flow adjustment block on the substrate and the dimension of each flow adjustment block in the first direction includes: at a first mapping position on the substrate corresponding to a first flow adjustment block, defining a first target coating zone corresponding to the first flow adjustment block, a width of the first target coating zone being equal to the dimension of the flow adjustment block in the first direction, and a length of the first target coating zone being equal to a dimension of the substrate in a second direction; where the first flow adjustment block is any one of the flow adjustment blocks; and the second direction is a direction perpendicular to the first direction in the plane of the substrate.

Thus, the obtained target coating zone is a regular region with a width equal to the dimension of the flow adjustment block in the first direction and a length equal to the dimension of the substrate in the second direction, which is conducive not only to position matching between the target coating zone and the flow adjustment block, but also to the detection of coating data for each target coating zone.

In some embodiments, the method includes: assigning a different code to each flow adjustment block; assigning a different serial number to each target coating zone; and storing a mapping relationship between the code of the flow adjustment block and the serial number of a corresponding target coating zone.

In the coating method provided in the embodiments of this application, a mapping relationship between each target coating zone and its corresponding flow adjustment block can be established, so that the corresponding flow adjustment block can be located quickly when an abnormality exists in the coating quality of the target coating zone.

In some embodiments, the assigning a different code to each flow adjustment block includes: determining a median flow adjustment block based on the position of each flow adjustment block, the median flow adjustment block being a flow adjustment block located at a middle position of all flow adjustment blocks arranged in an array; and encoding the flow adjustment blocks along the first direction and a third direction, respectively, starting from the position of the median flow adjustment block, the third direction being an opposite direction of the first direction.

In the coating method provided in the embodiments of this application, the median flow adjustment block is determined based on the position of each flow adjustment block, and the flow adjustment blocks are encoded along the first direction and the third direction, respectively, starting from the position of the median flow adjustment block, where the median flow adjustment block can be used as a reference position. Since the reference position is fixed, it is more conducive to quick location of the target coating zone.

In some embodiments, the method includes: determining a target coating zone with a coating quality abnormality based on the coating data of each target coating zone; and determining a flow adjustment block to be adjusted based on the target coating zone with the coating quality abnormality.

In the coating method provided in the embodiments of this application, the flow adjustment block to be adjusted can be quickly located based on the target coating zone with a coating quality abnormality, and the coating quality can be quickly restored by adjusting the corresponding flow adjustment block, improving the production quality and efficiency of the coating process.

In some embodiments, the coating data includes a slurry weight in the target coating zone, and the determining coating quality information of each target coating zone based on detected coating data of each target coating zone includes: obtaining a coating weight deviation value of the target coating zone based on a preset target value and the slurry weight in each target coating zone; and determining the coating quality information of the target coating zone based on the coating weight deviation value of the target coating zone.

In the coating method provided in the embodiments of this application, the coating quality information of the target coating zone can be obtained based on the coating weight deviation value between the slurry weight of each target coating zone obtained by partitioning and the preset target value, thereby enabling quality inspection for each target coating zone.

In some embodiments, the coating quality information includes a coating quality distribution map, and the determining the coating quality information of the target coating zone based on the coating weight deviation value of the target coating zone includes: determining, based on the coating weight deviation value corresponding to each target coating zone, marker information of characterizing a degree of coating weight deviation for each target coating zone; where different degrees of coating weight deviation correspond to different marker information; generating and displaying the coating quality distribution map based on the marker information corresponding to each target coating zone, where the coating quality distribution map includes each target coating zone annotated with corresponding marker information.

In the coating method provided in the embodiments of this application, the coating quality information is displayed in the form of a coating quality distribution map, which provides strong visibility and intuitively reflects different degrees of coating weight deviation for different target coating zones, thereby enabling working personnel to visually observe the coating quality information of each target coating zone.

In some embodiments, the marker information is color marker information, and the generating the coating quality distribution map based on the marker information corresponding to each target coating zone includes: rendering a coating partition map based on position information of each target coating zone; and filling, based on color marker information corresponding to each target coating zone, an image region of the coating partition map corresponding to each target coating zone with colors indicated by the corresponding color marker information, to obtain the coating quality distribution map.

In the coating method provided in the embodiments of this application, color marker information is used as the marker information, so that different coating quality information of different target coating zones can be visually displayed, and a region with a coating quality abnormality can be quickly located based on the marker information, thereby guiding the adjustment of slurry weight and improving the production efficiency of the coating process.

In some embodiments, the coating quality information includes a coating quality distribution map, and the determining the coating quality information of the target coating zone based on the coating weight deviation value of the target coating zone includes: generating and displaying a coating quality distribution map of the target coating zone based on a plurality of coating weight deviation values of each target coating zone, the plurality of coating weight deviation values being obtained from latest coating data of the target coating zone collected for a preset number of times; where the coating quality distribution map is used to characterize coating quality trend information of the target coating zone.

With the coating method provided in the embodiments of this application, prediction of the coating quality of the target coating zone can be implemented, improving the reliability of coating quality inspection for the target coating zone.

In some embodiments, the generating the coating quality distribution map of the target coating zone based on a plurality of coating weight deviation values of each target coating zone includes: generating coating quality trend information of each target coating zone based on the plurality of coating weight deviation values of each target coating zone; rendering a coating partition map based on position information of each target coating zone; and annotating the coating quality trend information of each target coating zone in an image region of the coating partition map corresponding to each target coating zone to obtain the coating quality distribution map of the target coating zone.

In the coating method provided in the embodiments of this application, the obtained coating quality distribution map can display the quality variation trend information of each target coating zone, enabling prediction of the coating quality of the target coating zone and improving the reliability of coating quality inspection for the target coating zone.

In some embodiments, the coating quality trend information includes a variation polyline of the coating weight deviation values, and the annotating the coating quality trend information of each target coating zone in an image region of the coating partition map corresponding to each target coating zone to obtain the coating quality distribution map of the target coating zone includes: rendering a respective variation polyline for each target coating zone in an image region of the coating partition map corresponding to each target coating zone, to obtain the coating quality distribution map of the target coating zone.

The coating method provided in the embodiments of this application enables a more intuitive display of coating quality variations of the target coating zone, facilitating operators in predicting the coating quality of the target coating zone and improving the reliability of coating quality inspection for the target coating zone.

In some embodiments, the method further includes: dividing an image region corresponding to each target coating zone in the coating partition map into a plurality of quality gradient regions based on different control thresholds of slurry weight; and filling each quality gradient region with a color corresponding to a quality gradient of the quality gradient region.

The coating method provided in the embodiments of this application enables intuitive display of the coating quality trend of each target coating zone.

In some embodiments, the method further includes: determining the presence of a coating quality a coating quality abnormality in the target coating zone based on a preset alarm condition and the slurry weight of the target coating zone; and outputting alarm information.

The coating method provided in the embodiments of this application improves the reliability of coating quality inspection by setting a preset alarm condition to determine whether an abnormality exists in the coating quality of the target coating zone.

In some embodiments, the method includes: determining an adjustment parameter for the coating die based on the coating quality distribution map; and adjusting a posture of the coating die based on the adjustment parameter.

The coating method provided in the embodiments of this application enables real-time monitoring of the position of the coating die to keep the coating die level, reducing the impact of non-coating factors on coating quality, and thereby improving the coating quality.

The above description is only an overview of the technical solutions of the embodiments of this application. To enable a clearer understanding of the technical means of the embodiments of this application, they can be implemented in accordance with the contents of the specification, and to make the above and other objectives, features, and advantages of the embodiments of this application more apparent and understandable, specific implementations of this application are provided below.

### BRIEF DESCRIPTION OF DRAWINGS

Persons of ordinary skill in the art can clearly understand various other advantages and benefits by reading the detailed description of the preferred embodiments below. The accompanying drawings are intended to merely illustrate the preferred embodiments rather than to limit this application. Throughout the accompanying drawings, the same reference signs denote the same components. In the accompanying drawings:
FIG. 1 is a schematic structural diagram of a coating system according to one or more embodiments;
FIG. 2 is a schematic diagram of an overall structure of a coating die according to one or more embodiments;
FIG. 3 is a schematic diagram of positions of flow adjustment mechanisms and flow adjustment blocks of a coating die according to one or more embodiments;
FIG. 4 is a top view of a coating die according to one or more embodiments;
FIG. 5 is another schematic structural diagram of a coating system according to one or more embodiments;
FIG. 6 is a flowchart of steps of a coating method according to one or more embodiments;
FIG. 7 is a schematic diagram of partitioning according to one or more embodiments;
FIG. 8 is a schematic diagram of a coating quality distribution map according to one or more embodiments;
FIG. 9 is another schematic diagram of a coating quality distribution map according to one or more embodiments;
FIG. 10 is a coating quality distribution map characterizing a lateral tilt of a coating die according to one or more embodiments; and
FIG. 11 is a coating quality distribution map characterizing a longitudinal tilt of a coating die according to one or more embodiments.

Description of reference signs in the embodiments:
coating die 01, detection apparatus 02, flow adjustment block 03, substrate 04, first die 05, second die 06, flow adjustment mechanism 07, feed inlet 08, gasket 09, coating system 10, coating quality statistics apparatus 11, statistics module 12, display module 13, first electrode plate S1, second electrode plate S2, third electrode plate S3, and electrode plate spacing T.

### DESCRIPTION OF EMBODIMENTS

The embodiments of the technical solutions of this application will be described in detail below with reference to the accompanying drawings. The following embodiments are only used to illustrate the technical solutions of this application more clearly and are therefore only examples, not intended to limit the scope of protection of this application.

Unless otherwise defined, all technical and scientific terms used herein have the same meaning as commonly understood by those skilled in the technical field of this application; the terms used herein are only for the purpose of describing specific embodiments and are not intended to limit this application; the terms "including" and "having" and any variations thereof in the specification, claims, and the above description of the drawings of this application are intended to cover non-exclusive inclusion.

In the description of the embodiments of this application, technical terms such as "first" and "second" are only used to distinguish different objects and should not be understood as indicating or implying relative importance or implicitly indicating the number, specific order, or primary-secondary relationship of the indicated technical features. In the description of the embodiments of this application, "a plurality of' means two or more, unless otherwise explicitly specified.

Reference to "embodiment" herein means that a specific feature, structure, or characteristic described in connection with the embodiment may be included in at least one embodiment of this application. The appearance of the phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of this application, the term "and/or" merely describes an association relationship between associated objects, indicating that three relationships may exist, for example, A and/or B may indicate: A exists alone, A and B exist simultaneously, and B exists alone. Additionally, the character "/" herein generally indicates that the associated objects before and after it are in an "or" relationship.

In the description of the embodiments of this application, the term "a plurality of" refers to two or more (including two), similarly, "a plurality of groups" refers to two or more groups (including two groups), and " a plurality of sheets" refers to two or more sheets (including two sheets).

In the description of the embodiments of this application, technical terms such as "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" indicate orientations or positional relationships based on the drawings, and are only for the convenience of describing the embodiments of this application and simplifying the description, rather than indicating or implying that the referred device or element must have a specific orientation, be constructed and operated in a specific orientation, and therefore should not be construed as limiting the embodiments of this application.

In the description of the embodiments of this application, unless otherwise explicitly specified and limited, technical terms such as "mounting," "connection," "join," and "fastening" should be understood in a broad sense, for example, it may be a fixed connection, a detachable connection, or an integral connection; it may be a mechanical connection or an electrical connection; it may be a direct connection or an indirect connection through an intermediary, or it may be the internal communication or interaction between two elements. Those skilled in the art can understand the specific meanings of the above terms in the embodiments of this application based on specific situations.

Coating is the process of applying of a thin layer of coating material in liquid or powder form onto the surface of objects such as fabrics, paper, metal foils, or plates. Coating is an indispensable step in the manufacturing process of battery cells.

A battery cell includes an electrode assembly and an electrolyte, where the electrode assembly includes a positive electrode plate, a negative electrode plate, and a separator. The battery cell mainly relies on the movement of metal ions between the positive electrode plate and the negative electrode plate to operate. In the production process of battery cells, both the positive electrode plate and the negative electrode plate are made using a coating process. By way of example, a positive electrode active material, a conductive agent, a binder, and a solvent are mixed to form a viscous slurry, which is then uniformly, continuously, or intermittently coated onto a substrate (such as aluminum foil) to produce the positive electrode plate. During coating, the thickness consistency at various coating positions and whether the coating thickness is controlled within a tolerance range required by the process directly affect the safety, capacity, lifespan, and other performance aspects of the battery cell. Therefore, coating quality inspection is an important part of the battery production process. In the related art, coating quality is inspected using an areal density meter to identify abnormalities, however, specific abnormal locations cannot be identified, and manual inspection by operators is required, making it difficult to intuitively locate a region with a weight abnormality, which is unfavorable for guiding operators to make quick adjustment in response to the abnormal state, thereby affecting the production efficiency of the coating process.

Based on the above considerations, to address the issue of being unable to locate the coating position when a coating quality abnormality is detected, embodiments of this application provide a coating system and a coating method. In the coating system, the plurality of flow adjustment blocks of the coating die have a same dimension in the first direction, and the dimension of the flow adj ustment block in the first direction is equal to a dimension of the detection light spot projected by the detection apparatus onto the substrate. This design ensures that the dimension of each flow adjustment block in the first direction is equal to the dimension of the detection light spot in the first direction, so that the dimension of the coating zone detected using the detection light spot in the first direction is also the same as the dimension of each flow adjustment block, achieving correspondence between each coating zone and each flow adjustment block. When a coating quality abnormality in a coating zone is detected, a flow adjustment block corresponding to a position at which the abnormality occurs can be located, and the coating quality can be corrected by adjusting the corresponding flow adjustment block, improving the production efficiency of the coating process.

The coating system in the embodiments of this application may be a system used for performing a slurry coating operation, where the slurry coating operation includes, but is not limited to, the step of applying slurry onto a substrate. The coating system disclosed in this application can be applied to the battery electrode plate coating scenario in the battery cell manufacturing process. For example, in the production process of batteries such as lithium-ion batteries, in execution of the slurry coating operation, the coating system is used to apply slurry onto a substrate to produce electrode plates for battery manufacturing and to inspect the quality of the coating layer after coating, improving the production efficiency in the coating process of battery electrode plates and improving the coating quality of battery electrode plates.

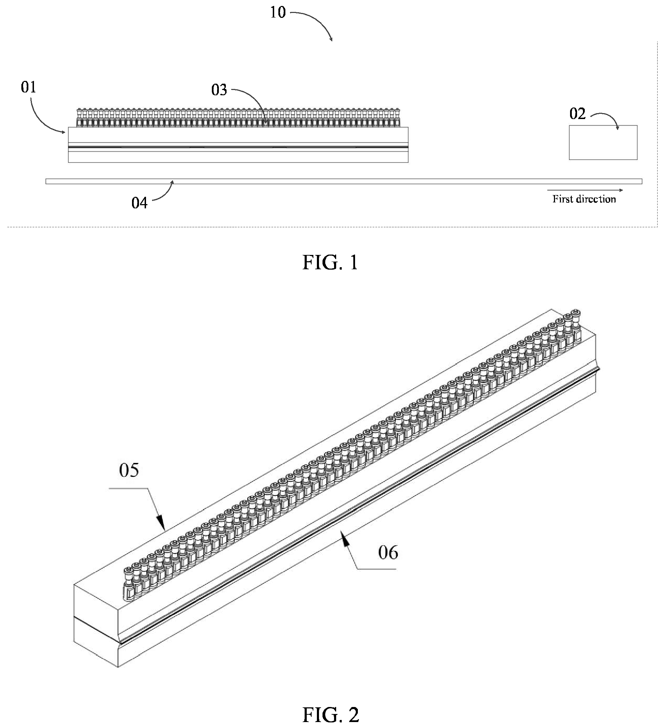

Referring to FIG. 1, FIG. 1 is a schematic structural diagram of a coating system according to an embodiment of this application. The coating system includes: a coating die 01 and a detection apparatus 02;

The coating die 01 includes a plurality of flow adjustment blocks 03, where the plurality of flow adjustment blocks 03 have a same dimension in a first direction, and the dimension of the flow adjustment block 03 in the first direction is equal to a dimension in the first direction of a detection light spot projected by the detection apparatus 02 onto a substrate 04.

The first direction is a conveying direction of the substrate 04 in the coating system, for example, if the conveying direction of the substrate 04 is from left to right, the first direction is from left to right.

By way of example, the dimension of the flow adjustment block 03 in the first direction may be the width value of the flow adjustment block 03 in the first direction, and the dimension of the detection light spot in the first direction may be the coverage width of the detection light emitted by the detection apparatus 02 in the first direction.

The coating system provided in the embodiments of this application can apply slurry onto the substrate 04 through the coating die 01 to obtain a coating layer. Since the plurality of flow adjustment blocks 03 have a same dimension in the first direction, and the flow adjustment blocks 03 can adjust the slurry coating flow at their corresponding positions on the substrate 04, a coating zone corresponding to each flow adjustment block 03 can be obtained on the coating layer based on the position of each flow adjustment block 03, thereby obtaining a plurality of uniformly distributed coating zones. Moreover, since the dimension of each flow adjustment block 03 in the first direction is equal to the dimension of the detection light spot in the first direction, each coating zone, each flow adjustment block 03, and each detection light spot share identical dimensions in the first direction. Thus, when a coating quality abnormality is detected in any coating zone through the detection light spot, the corresponding flow adjustment block can be located based on the position of the abnormal coating zone, and the coating quality can be corrected by adjusting the corresponding flow adjustment block, improving the production efficiency of the coating process.

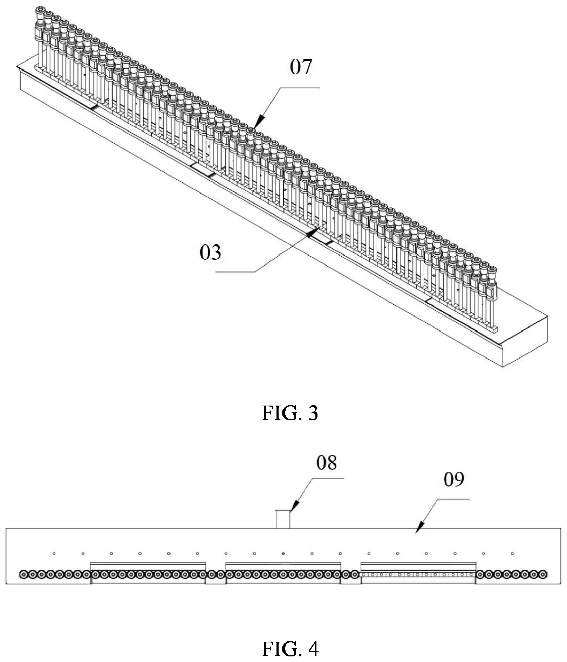

Referring to FIG. 2 to FIG. 4, FIG. 2 is a schematic diagram of an overall structure of a coating die according to an embodiment of this application, FIG. 3 is a schematic diagram of positions of flow adjustment mechanisms and flow adjustment blocks of a coating die according to an embodiment of this application, and FIG. 4 is a top view of a coating die according to an embodiment of this application.

According to some embodiments of this application, the coating die 01 further includes a feed inlet 08, a first die 05, a second die 06, and a gasket 09. A cavity is formed between the first die 05 and the second die 06, and the gasket 09 is disposed within the cavity. The plurality of flow adjustment blocks 03 are arranged in an array on a side surface of the first die 05 away from the second die 06, the first end of the flow adjustment block 03 being in contact with the gasket 09. The feed inlet 08 is in communication with the cavity.

The feed inlet 08 is configured to connect to a material supply system to supply slurry. The slurry entering through the feed inlet 08 is uniformly pressurized in the cavity between the first die 05 and the second die 06, and then extruded through a slit formed by the gasket 09 and transferred onto a moving substrate, achieving slurry coating.

The coating die 01 provided in the embodiments of this application can achieve coating on the substrate 04 by extruding slurry, where the first end of the flow adjustment block 03 is in contact with the gasket 09, allowing force to be applied to the gasket 09 to adjust the slit size at the gasket 09, thereby adjusting the thickness of the coating layer on the substrate 04. Thus, when there is an abnormality in the quality of the coating layer, the slit size can be adjusted by adjusting the flow adjustment block corresponding to the abnormal position to adjust the thickness of the coating layer.

According to some embodiments of this application, the coating die 01 further includes flow adjustment mechanisms 07 connected to the flow adjustment blocks. Each flow adjustment mechanism 07 corresponds to a flow adjustment block 03, and the flow adjustment mechanism 07 is connected to a second end of its corresponding flow adjustment block 03.

Referring to FIG. 3, the second end of the flow adjustment block 03 is connected to a flow adjustment mechanism 07, and since the flow adjustment blocks 03 are arranged in an array, the flow adjustment mechanisms 07 are also arranged in an array.

In some examples, the flow adjustment block 03 may be a pressure-adjustable device, and the flow adjustment mechanism 07 may be a pressure control device to change the pressure applied by the flow adjustment block 03 on the gasket. By way of example, the flow adjustment block 03 may be a fastener with an adjustable length in the direction perpendicular to the surface of the gasket 09, and the flow adjustment mechanism 07 can change the pressure applied by the flow adjustment block 03 on the gasket by adjusting the length of the fastener in the direction of the surface of the gasket, achieving adjustment of the slit gap, thereby controlling the slurry flow and enabling an increase or decrease in the coated slurry.

The coating die 01 provided in the embodiments of this application can change the pressure applied by the flow adjustment block 03 on the gasket 09 through the flow adjustment mechanism 07. Thus, when there is an abnormality in the quality of the coating layer on the substrate 04, the pressure applied by the flow adjustment block on the gasket can be adjusted by adjusting the flow adjustment block corresponding to the abnormal position, achieving adjustment of the slit gap at the abnormal position, thereby controlling the slurry flow and enabling an increase or decrease in the coated slurry.

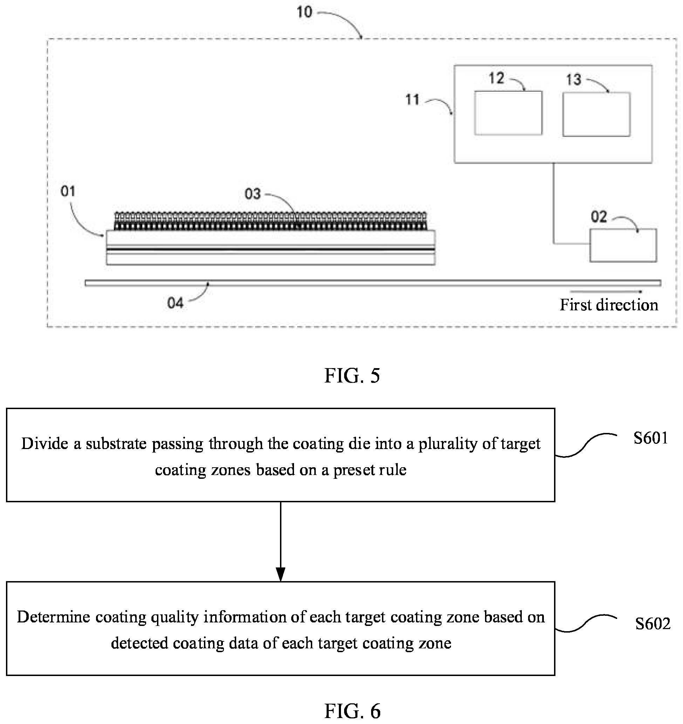

FIG. 5 is another schematic structural diagram of a coating system according to an embodiment of this application. Referring to FIG. 5, according to some embodiments of this application, the coating system 10 further includes a coating quality statistics apparatus 11, where the coating quality statistics apparatus 11 includes: a statistics module 12 and a display module 13. The statistics module 12 is configured to determine coating quality information of each target coating zone based on coating data of the target coating zone detected by the detection apparatus; the target coating zone includes at least one coating zone on the substrate; and the coating data includes a slurry weight in the target coating zone. The statistics module 12 is further configured to obtain a coating weight deviation value of the target coating zone based on a preset target value and the slurry weight in each target coating zone; and to determine the coating quality information of the target coating zone based on the coating weight deviation value of the target coating zone; where the coating quality information includes a coating quality distribution map. The statistics module 12 is further configured to determine, based on the coating weight deviation value corresponding to each target coating zone, marker information of characterizing the degree of coating weight deviation for each target coating zone, where different degrees of coating weight deviation correspond to different marker information; and to generate and display the coating quality distribution map based on the marker information corresponding to each target coating zone, where the coating quality distribution map includes each target coating zone annotated with the corresponding marker information. The specific implementation method of the functions of the coating module 12 is described in detail in the coating method embodiments below.

The display module 13 is configured to display the coating quality information of the target coating zone.

In some examples, the statistics module 12 may be a processor with data processing capabilities to obtain the coating data of the target coating zone detected by the detection apparatus and perform data processing based on the coating data.

By way of example, the substrate 04 after coating has the slurry of a specific weight, and the statistics module 12 can detect the coating data of the target coating zone through the detection apparatus. The coating data may be the coating density per unit area, the coating weight, or the coating thickness. The coating quality information of each target coating zone may reflect the coating quality status of that target coating zone, where the target coating zone may be divided based on a preset rule.

In some examples, the display module 13 may be a monitor or a display screen of a smart terminal.

The coating system provided in the embodiments of this application compiles coating quality information of each target coating zone through the statistics module 12 and displays it through the display module 13, enabling visualization of the coating quality of each coating zone on the substrate, facilitating refined monitoring of coating quality.

According to some embodiments of this application, the statistics module is further configured to determine a mapping position of each flow adjustment block on the substrate based on the position of each flow adjustment block of the coating die; and to divide the substrate into a plurality of target coating zones based on the mapping position of each flow adjustment block on the substrate and a dimension of each flow adjustment block in the first direction.

In some examples, the flow adjustment blocks are arranged in an array, and each flow adjustment block 03 can adjust the slit formed by the gasket 09 in contact with it. Since the slurry is extruded from the slit, the coating zone formed on the substrate 04 by the slurry extruded from the corresponding slit position corresponds to the flow adjustment block 03. Thus, the position of each flow adjustment block 03 can be used as the mapping position of the flow adjustment block on the substrate 04, and this mapping position is used as the position of a corresponding target coating zone, with the dimension of the flow adjustment block in the first direction used as the dimension of the target coating zone, obtaining a plurality of target coating zones corresponding to the flow adjustment blocks.

The coating system provided in the embodiments of this application can divide the substrate into a plurality of target coating zones based on the mapping position of each flow adjustment block on the substrate and the dimension of each flow adjustment block in the first direction, thereby obtaining target coating zones corresponding to the flow adjustment blocks.

According to some embodiments of this application, the statistics module is further configured to, at a first mapping position on the substrate corresponding to a first flow adjustment block, define a first target coating zone corresponding to the first flow adjustment block, where the width of the first target coating zone is equal to the dimension of the flow adjustment block in the first direction, and the length of the first target coating zone is equal to the dimension of the substrate in a second direction. The first flow adjustment block is any one of the flow adjustment blocks, and the second direction is a direction perpendicular to the first direction in the plane of the substrate.

In one example, the detection light spot emitted by the detection apparatus scans reciprocally in the second direction of the substrate. To improve detection accuracy, the length of the first target coating zone obtained by the embodiments of this application is equal to the dimension of the substrate in the second direction. Thus, the obtained target coating zone is a regular region with a width equal to the dimension of the flow adjustment block in the first direction and a length equal to the dimension of the substrate in the second direction, which is conducive not only to position matching between the target coating zone and the flow adjustment block, but also to the detection of coating data for each target coating zone.

In the coating system of this example, since the dimension of each flow adjustment block 03 in the first direction is the same as the dimension of the detection light spot in the first direction, a coating zone corresponding to each flow adjustment block 03 can be obtained on the coating layer based on the position of each flow adjustment block 03, thereby obtaining a plurality of uniformly distributed coating zones with the same dimension as the flow adjustment blocks 03. This enables each coating zone, each flow adjustment block, and each detection light spot to share identical dimensions in the first direction. The dimension of the detection light spot is consistent with the dimension of the target coating zone, which enables coating inspection for one target coating zone at a time and improves inspection accuracy. The dimension of each coating zone is consistent with the dimension of each flow adjustment block, so that when a coating quality abnormality is detected in any coating zone, the corresponding flow adjustment block can be located based on the position of the abnormal coating zone, and the coating quality can be corrected by adjusting the corresponding flow adjustment block, improving the production efficiency of the coating process.

The descriptions of the various embodiments above tend to emphasize the differences between the embodiments, and their similarities or commonalities can be referenced mutually. For brevity, details are not repeated herein.

According to some embodiments of this application, a coating method is provided. The coating method is applied to the coating system described above. Referring to FIG. 6, FIG. 6 is a flowchart of steps of a coating method according to an embodiment of this application, where the method may include the following steps S601 and S602.

S601: Divide a substrate passing through a coating die into a plurality of target coating zones based on a preset rule.

In some examples, the substrate refers to a substrate that is about to be coated with slurry, and the substrate is driven by a roller assembly to achieve uniform substrate coating. The substrate may be aluminum foil, fabric, paper, or the like. For ease of description, in this embodiment, a coating process for a battery cell is taken as an example. For example, the substrate is aluminum foil, and slurry is coated onto the substrate to produce an electrode plate for a battery.

In some examples, the preset rule may be set based on the dimension of the detection light spot in the first direction or based on the position and the dimension in the first direction of each flow adjustment block, or the width setting may be customized based on actual needs, dividing the substrate into a plurality of target coating zones to distinguish the coating quality of different zones and achieve partitioned control over the coating quality on the substrate.

S602: Determine coating quality information of each target coating zone based on detected coating data of each target coating zone.

By way of example, the substrate 04 after coating has the slurry of a specific weight, and the coating data of the target coating zone can be detected through the detection apparatus 02. The detection apparatus 02 may be an areal density meter, a weight detector, or a thickness detector, and accordingly, the coating data may be the coating density per unit area, the coating weight, or the coating thickness.

By way of example, the coating quality information of each target coating zone may reflect the coating quality status of that target coating zone. For example, the coating quality information of a target coating zone represents information indicative of the coating quality of the target coating zone, such as that the coating layer of the target coating zone is excessively thick, excessively thin, or non-uniform.

In the coating method provided in embodiments of this application, the substrate passing through the coating die is divided into a plurality of target coating zones based on a preset rule, facilitating differentiation of coating quality in different zones and enabling partitioned control over the coating quality on the substrate. After the coating quality information of each target coating zone is determined based on the detected coating data of each target coating zone, when an abnormality exists in the coating quality of any target coating zone, the abnormal target coating zone can be correspondingly identified. This allows for quick location of the abnormal coating zone, guiding technicians to adjust the flow in the abnormal zone, thereby improving the production efficiency of the coating process.

According to some embodiments of this application, the dividing a substrate passing through a coating die into a plurality of target coating zones based on a preset rule includes: dividing the substrate passing through the coating die into a plurality of target coating zones based on the position and the dimension in the first direction of each flow adjustment block.

In some examples, the substrate passing through the coating die 01 is divided into a plurality of target coating zones based on the position and the dimension in the first direction of each flow adjustment block 03. For example, if at the current moment, a coating object of the coating die 01 is a rectangular region with a length of m in the first direction and a width of n in the second direction, the second direction is a direction perpendicular to the first direction in the plane of the substrate 04, and the dimension of the flow adjustment block in the first direction is t, after the rectangular region is divided, m/t target coating zones are obtained, each with a length of c and a width of n.

In the coating method provided in the embodiments of this application, the substrate passing through the coating die is divided into a plurality of target coating zones based on the position and the dimension in the first direction of each flow adjustment block, which enables each target coating zone to have a mapping relationship with its corresponding flow adjustment block. After the coating quality information of each target coating zone is determined based on detected coating data of each target coating zone, when an abnormality exists in the coating quality of any target coating zone, a flow adjustment block corresponding to that zone can be determined according to the position of the target coating zone, thereby enabling quick location and flow adjustment of the abnormal coating zone and improving the production efficiency of the coating process.

According to some embodiments of this application, the dividing the substrate passing through the coating die into a plurality of target coating zones based on the position and the dimension in the first direction of each flow adjustment block includes: determining a mapping position of each flow adjustment block on the substrate based on the position of each flow adjustment block; and dividing the substrate into a plurality of target coating zones based on the mapping position of each flow adjustment block on the substrate and the dimension of each flow adjustment block in the first direction.

In some examples, the flow adjustment blocks are arranged in an array, and each flow adjustment block 03 can adjust the slit formed by the gasket 09 in contact with it. Since the slurry is extruded from the slit, the coating zone formed on the substrate 04 by the slurry extruded from the corresponding slit position corresponds to the flow adjustment block 03. Thus, the position of each flow adjustment block 03 can be used as the mapping position of the flow adjustment block on the substrate 04, and this mapping position is used as the position of a corresponding target coating zone, with the dimension of the flow adjustment block in the first direction used as the dimension of the target coating zone, obtaining a plurality of target coating zones corresponding to the flow adjustment blocks.

In the coating method provided in the embodiments of this application, the substrate can be divided into a plurality of target coating zones based on the mapping position of each flow adjustment block on the substrate and the dimension of each flow adjustment block in the first direction, thereby obtaining target coating zones corresponding to the flow adjustment blocks.

According to some embodiments of this application, the dividing the substrate into a plurality of target coating zones based on the mapping position of each flow adjustment block on the substrate and the dimension of each flow adjustment block in the first direction includes: at a first mapping position on the substrate corresponding to a first flow adjustment block, defining a first target coating zone corresponding to the first flow adjustment block, where the width of the first target coating zone is equal to the dimension of the flow adjustment block in the first direction, and the length of the first target coating zone is equal to the dimension of the substrate in a second direction.

The first flow adjustment block is any one of the flow adjustment blocks, and the second direction is a direction perpendicular to the first direction in the plane of the substrate.

In some examples, a plurality of flow adjustment blocks are included, and to accurately divide the substrate to obtain a target coating zone corresponding to each flow adjustment block, the embodiments of this application divide the substrate based on the mapping position corresponding to any flow adjustment block.

In one example, the detection light spot emitted by the detection apparatus scans reciprocally in the second direction of the substrate. To improve detection accuracy, the length of the first target coating zone obtained by the embodiments of this application is equal to the dimension of the substrate in the second direction. Thus, the obtained target coating zone is a regular region with a width equal to the dimension of the flow adjustment block in the first direction and a length equal to the dimension of the substrate in the second direction, which is conducive not only to position matching between the target coating zone and the flow adjustment block, but also to the detection of coating data for each target coating zone.

According to some embodiments of this application, the coating method further includes: assigning a different code to each flow adjustment block; assigning a different serial number to each target coating zone; and storing a mapping relationship between the code of the flow adjustment block and the serial number of a corresponding target coating zone.

In one example, the code of the flow adjustment block may be represented by Arabic numerals or letters, with different codes representing different flow adjustment blocks, and the serial number of the target coating zone may also be represented by Arabic numerals or letters, with different serial numbers representing different target coating zones.

For a matched pair of a target coating zone and a flow adjustment block, their corresponding codes and serial numbers have a mapping relationship. It should be noted that for a matched pair of a target coating zone and a flow adjustment block, their corresponding codes and serial numbers may be the same or different. For example, for a matched pair of a target coating zone and a flow adjustment block, the corresponding code and serial number may be 1 and a, respectively, and for another matched pair of a target coating zone and a flow adjustment block, the corresponding code and serial number may be 2 and b, respectively. For another example, for a corresponding code and serial number, both the codes and serial numbers may 1.

In the coating method provided in the embodiments of this application, a mapping relationship between each target coating zone and its corresponding flow adjustment block can be established, so that the corresponding flow adjustment block can be located quickly when an abnormality exists in the coating quality of the target coating zone.

According to some embodiments of this application, the assigning a different code to each flow adjustment block includes: determining a median flow adjustment block based on the position of each flow adjustment block; and encoding the flow adjustment blocks along the first direction and a third direction, respectively, starting from the position of the median flow adjustment block, where the median flow adjustment block is the flow adjustment block located at the middle position of all flow adjustment blocks arranged in an array, and the third direction is the opposite direction of the first direction.

In one example, due to different production requirements, the dimension of continuous coating layers on the substrate in the first direction may vary, and the positions of target coating zones for coating layers of different dimensions also vary, which is not conducive to quick location of the target coating zone. Therefore, in the embodiments of this application, the median flow adjustment block is determined, the flow adjustment blocks are encoded along the first direction and the third direction, respectively, starting from the position of the median flow adjustment block, where the median flow adjustment block can be used as a reference position. Since the reference position is fixed, it is more conducive to quick location of the target coating zone.

For ease of description, an example is used in the embodiments, in which for a matched pair of a target coating zone and a flow adjustment block, the code and the serial number are identical, and coated electrode plates are for battery cells.

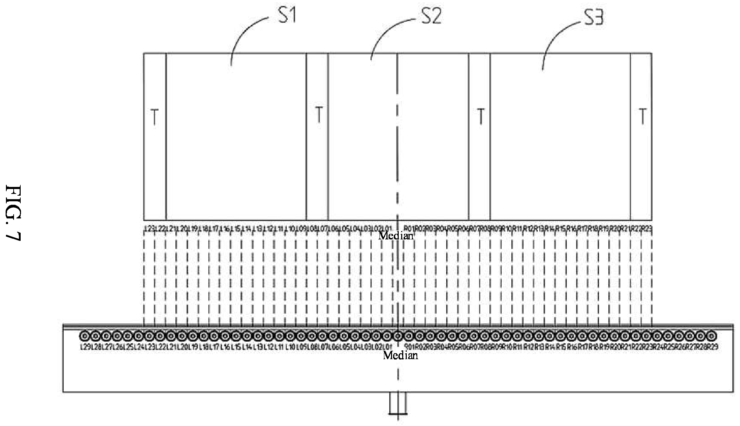

Referring to FIG. 7, FIG. 7 is a schematic diagram of partitioning of target coating zones according to an embodiment of this application. As shown in FIG. 7, the substrate has three coated electrode plates, namely, a first electrode plate S1, a second electrode plate S2, and a third electrode plate S3, with an electrode plate spacing T between each pair of electrode plates. The codes of the flow adjustment blocks are "L29 to L01," "median," and "R01 to R29," respectively. In FIG. 7, "median" represents the median flow adjustment block, "R01" indicates the first flow adjustment block to the right of the median flow adjustment block, "R02" indicates the second flow adjustment block to the right of the median flow adjustment block, "R29" indicates the 29-th flow adjustment block to the right of the median flow adjustment block, "L01" indicates the first flow adjustment block to the left of the median flow adjustment block, "L02" indicates the second flow adjustment block to the left of the median flow adjustment block, "L29" indicates the 29-th flow adjustment block to the left of the median flow adjustment block, and so forth for other codes, which are not repeated herein. Accordingly, the serial number of the target coating zone is consistent with the code of its corresponding flow adjustment block.

In the coating method provided in the embodiments of this application, the median flow adjustment block is determined based on the position of each flow adjustment block, and the flow adjustment blocks are encoded along the first direction and the third direction, respectively, starting from the position of the median flow adjustment block, where the median flow adjustment block can be used as a reference position. Since the reference position is fixed, it is more conducive to quick location of the target coating zone.

According to some embodiments of this application, the coating method includes: determining a target coating zone with a coating quality abnormality based on the coating data of each target coating zone; and determining a flow adjustment block to be adjusted based on the target coating zone with the coating quality abnormality.

By way of example, referring to FIG. 7, if it is determined that a coating abnormality exists at the target coating zone with serial number "L01" based on the obtained coating data of the target coating zone at "L01" in FIG. 7, since the serial number of the target coating zone has a mapping relationship with the code of the flow adjustment block, it can be determined that the flow adjustment block to be adjusted is the one with the code "L01."

In the coating method provided in the embodiments of this application, the flow adjustment block to be adjusted can be quickly located based on the target coating zone with a coating quality abnormality, and the coating quality can be quickly restored by adjusting the corresponding flow adjustment block, improving the production quality and efficiency of the coating process.

According to some embodiments of this application, the coating data includes the slurry weight coated in the target coating zone, and the determining coating quality information of each target coating zone based on detected coating data of each target coating zone includes: obtaining a coating weight deviation value of the target coating zone based on a preset target value and the slurry weight in each target coating zone; and determining the coating quality information of the target coating zone based on the coating weight deviation value of the target coating zone.

In some examples, the preset target value may be a standard weight for each target coating zone obtained based on process experience or process requirements. By comparing the slurry weight of each target coating zone with the preset target value, the coating weight deviation value of the target coating zone can be obtained, which can reflect the coating quality information of the target coating zone.

In the coating method provided in the embodiments of this application, the coating quality information of the target coating zone can be obtained based on the coating weight deviation value between the slurry weight of each target coating zone obtained by partitioning and the preset target value, thereby enabling quality inspection for each target coating zone.

According to some embodiments of this application, the coating quality information includes a coating quality distribution map, and the determining the coating quality information of the target coating zone based on the coating weight deviation value of the target coating zone includes: determining, based on the coating weight deviation value corresponding to each target coating zone, marker information of characterizing a degree of coating weight deviation for each target coating zone; where different degrees of coating weight deviation correspond to different marker information; and generating and displaying the coating quality distribution map based on the marker information corresponding to each target coating zone, where the coating quality distribution map includes each target coating zone annotated with corresponding marker information.

In some examples, the degree of coating weight deviation may include, but is not limited to any one of the following states indicating the coating quality of the target coating zone: overweight, slightly heavy, standard, slightly light, or ultralight. Different degrees of coating weight deviation correspond to different marker information to distinguish different degrees of coating weight deviation.

In the coating method provided in the embodiments of this application, the coating quality information is displayed in the form of a coating quality distribution map, enabling working personnel to visually observe the coating quality information of each target coating zone. Moreover, marker information of characterizing the degree of coating weight deviation for each target coating zone is determined based on the coating weight deviation value corresponding to each target coating zone, and different marker information is used to distinguish target coating zones with different degrees of coating weight deviation. As compared to the related art in which all abnormalities are characterized in a uniform method, different marker information is used to reflect different degrees of coating weight deviation in the embodiments of this application, intuitively reflecting different degrees of coating weight deviation for different target coating zones, and enabling quick determination of the coating quality of an abnormal target coating zone and quick location of the abnormal target coating zone based on the marker information.

According to some embodiments of this application, the marker information is color marker information, and the generating the coating quality distribution map based on the marker information corresponding to each target coating zone includes: rendering a coating partition map based on position information of each target coating zone; and filling, based on color marker information corresponding to each target coating zone, an image region of the coating partition map corresponding to each target coating zone with colors indicated by the corresponding color marker information, to obtain the coating quality distribution map.

In some examples, the marker information may be text information, pattern information, or color marker information. For ease of description, this embodiment takes color marker information as an example.

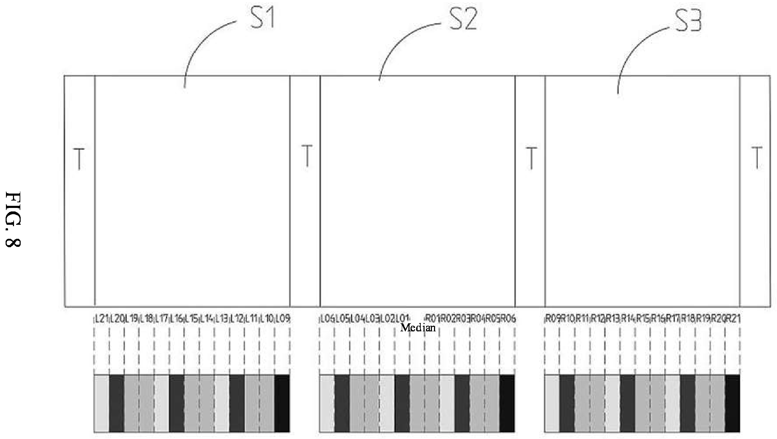

Referring to FIG. 8, FIG. 8 is a coating quality distribution map according to an embodiment of this application. FIG. 8 shows a first electrode plate S1, a second electrode plate S2, a third electrode plate S3, and coating partition maps corresponding to their respective target coating zones, where each partition in the coating partition map corresponds one-to-one with the target coating zone of each electrode plate. In this embodiment of this application, based on the coating weight deviation value of each target coating zone, marker information of characterizing a degree of coating weight deviation for each target coating zone can be determined, and based on color marker information corresponding to each target coating zone, an image region of the coating partition map corresponding to each target coating zone can be filled with colors indicated by the corresponding color marker information, to obtain the coating quality distribution map.

By way of example, red may be used to characterize that the target coating zone is in an overweight state, yellow to characterize that the target coating zone is in a slightly heavy state, green to characterize that the target coating zone is in a standard state, cyan to characterize that the target coating zone is in a slightly light state, and blue to characterize that the target coating zone is in an ultralight state. Thus, the obtained coating quality distribution map can intuitively display each target coating zone and its corresponding coating quality information, distinguishing differences between different target coating zones.

In the coating method provided in the embodiments of this application, color marker information is used as the marker information, so that different coating quality information of different target coating zones can be visually displayed, and a region with a coating quality abnormality can be quickly located based on the marker information, thereby guiding the adjustment of slurry weight and improving the production efficiency of the coating process.

According to some embodiments of this application, the coating quality information includes a coating quality distribution map, and the determining the coating quality information of the target coating zone based on the coating weight deviation value of the target coating zone further includes: generating and displaying a coating quality distribution map of the target coating zone based on a plurality of coating weight deviation values of each target coating zone, the plurality of coating weight deviation values being obtained from latest coating data of the target coating zone collected for a preset number of times; where the coating quality distribution map is used to characterize coating quality trend information of the target coating zone.

In some examples, the latest coating data of the target coating zone collected for a preset number of times may be the data closest in time to the current moment collected for the preset number of times. By way of example, coating weight deviation values of the target coating zone "L21" are obtained by acquiring five coating weights of the target coating zone "L21" collected for five times closest in time to the current moment and calculating coating weight deviation values for these five coating weights relative to the preset target value, and a coating quality distribution map of the target coating zone is generated and displayed based on these five coating weight deviation values of the target coating zone "L21."

In the coating method provided in the embodiments of this application, a plurality of coating weight deviation values of each target coating zone are obtained based on the latest coating data of the target coating zone collected for a preset number of times, a coating quality distribution map characterizing the coating quality trend information of the target coating zone is generated and displayed based on the plurality of coating weight deviation values of each target coating zone, enabling prediction of the coating quality of the target coating zone and improving the reliability of coating quality inspection for the target coating zone.

According to some embodiments of this application, the generating the coating quality distribution map of the target coating zone based on a plurality of coating weight deviation values of each target coating zone includes: generating coating quality trend information of each target coating zone based on the plurality of coating weight deviation values of each target coating zone; rendering a coating partition map based on position information of each target coating zone; and annotating the coating quality trend information of each target coating zone in an image region of the coating partition map corresponding to each target coating zone to obtain the coating quality distribution map of the target coating zone.

In some examples, the coating quality trend information may be a dot plot, a polyline plot, or a curve plot that can reflect variation information in coating weight.

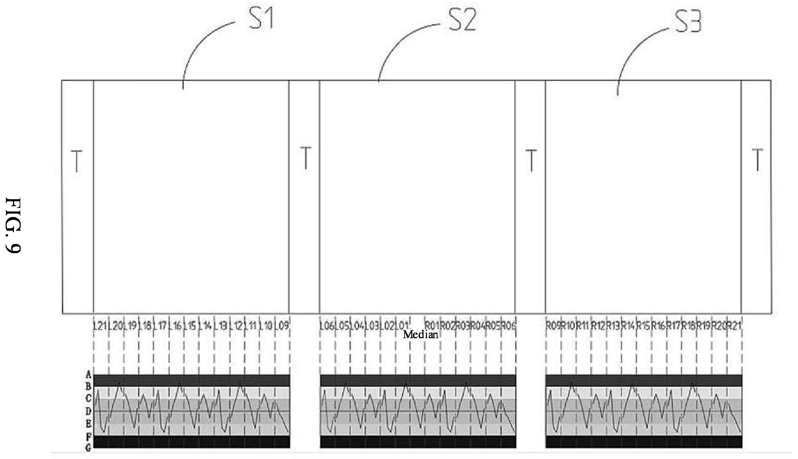

Referring to FIG. 9, FIG. 9 is another coating quality distribution map according to an embodiment of this application. FIG. 9 shows a first electrode plate S1, a second electrode plate S2, a third electrode plate S3, and a coating partition map corresponding to their respective target coating zones, where each image region in the coating partition map corresponds one-to-one with the target coating zone of each electrode plate.

In the coating method provided in the embodiments of this application, a coating quality distribution map of the target coating zone is obtained by annotating the coating quality trend information of each target coating zone in an image region of the coating partition map corresponding to each target coating zone. This coating quality distribution map can display the quality variation trend information of each target coating zone, enabling prediction of the coating quality of the target coating zone and improving the reliability of coating quality inspection for the target coating zone.

According to some embodiments of this application, the coating quality trend information includes a variation polyline of the coating weight deviation values, and annotating the coating quality trend information of each target coating zone in an image region of the coating partition map corresponding to each target coating zone to obtain the coating quality distribution map of the target coating zone includes: rendering a respective variation polyline for each target coating zone in an image region of the coating partition map corresponding to each target coating zone, to obtain the coating quality distribution map of the target coating zone.

Referring to FIG. 9, a variation polyline is rendered in an image region of the coating partition map corresponding to each target coating zone, where the variation polyline is generated based on a plurality of coating weight deviation values obtained from the latest coating data of each target coating zone collected for a preset number of times.

For ease of description, taking the target coating zone "L21" as an example, the variation polyline in "L21" is a trend polyline formed by connecting the five coating weights of the target coating zone "L21" closest in time to the current moment. From the polyline plot for the target coating zone "L21," it can be seen that the target coating zone "L21" exhibits a variation trend of "increasing → decreasing → increasing." Similarly, it can be seen that the target coating zone "L20" exhibits a variation trend of "increasing → decreasing." The variation trends of other target coating zones are as shown in FIG. 9 and details are not repeated herein. Thus, the coating quality variation trend for each target coating zone can be intuitively detected.

In the coating method provided in the embodiments of this application, with the variation polyline of the coating weight deviation values as the coating quality trend information, a respective variation polyline for each target coating zone is rendered in an image region of the coating partition map corresponding to each target coating zone, to obtain the coating quality distribution map of the target coating zones, enabling a more intuitive display of the coating quality variation situation of the target coating zone, facilitating operators in predicting the coating quality of the target coating zone, and improving the reliability of coating quality inspection for the target coating zone.

According to some embodiments of this application, the coating method further includes: dividing an image region corresponding to each target coating zone in the coating partition map into a plurality of quality gradient regions based on different control thresholds of slurry weight; and filling each quality gradient region with a color corresponding to a quality gradient of the quality gradient region.

In some examples, different control thresholds of slurry weight may be used to divide coating quality gradients of the target coating zone or to determine whether the coating quality of the target coating zone is in an overweight state, a slightly heavy state, a standard state, a slightly light state, or an ultralight state.

Referring to FIG. 9, in FIG. 9, based on different control thresholds, an upper specification line A, an upper control line B, an upper optimal line C, a target value D, a lower optimal line E, a lower control line F, and a lower specification line G are set, respectively, where the upper specification line A represents the upper weight limit of the target coating zone, the lower specification line G represents the lower weight limit of the target coating zone, and the target value D represents the ideal weight of the target coating zone. In one example, when the coating weight of the target coating zone is within a range between the upper specification line A and the upper control line B, it can be determined that the coating state of the target coating zone is the overweight state; when the coating weight of the target coating zone is within a range between the upper control line B and the upper optimal line C, it can be determined that the coating state of the target coating zone is the slightly heavy state; when the coating weight of the target coating zone is within a range between the upper optimal line C and the lower optimal line E, it can be determined that the coating state of the target coating zone is the standard state; when the coating weight of the target coating zone is within the range between the lower optimal line E and the lower control line F, it can be determined that the coating state of the target coating zone is the slightly light state; and when the coating weight of the target coating zone is within the range between the lower control line F and the lower specification line G, it can be determined that the coating state of the target coating zone is the ultralight state. Thus, an image region corresponding to each target coating zone in the coating partition map can be divided into a plurality of quality gradient regions, and each quality gradient region can be filled with a color corresponding to a quality gradient of the quality gradient region, enabling intuitive display of the coating quality trend of each target coating zone through real-time display of the coating partition map.

In the coating method provided in the embodiments of this application, an image region corresponding to each target coating zone in the coating partition map is divided into a plurality of quality gradient regions based on different control thresholds of slurry weight, and each quality gradient region is filled with a color corresponding to the quality gradient of the quality gradient region, enabling intuitive display of the coating quality trend of each target coating zone through real-time display of the coating partition map.

According to some embodiments of this application, the coating method further includes: determining the presence of a coating quality abnormality in the target coating zone based on a preset alarm condition and the slurry weight of the target coating zone; and outputting alarm information.

In some examples, whether an abnormality exists in the coating quality of a target coating zone can be determined by directly comparing the slurry weight of the target coating zone or by setting an alarm condition based on a process accuracy requirement.

By way of example, the preset alarm condition may be as follows: if any coating weight of the target coating zone is within the range between the upper optimal line C and the upper specification line A, it is considered that the coating weight of the target coating zone is abnormal; if any coating weight of the target coating zone is within the range between the lower optimal line E and the lower specification line G, it is considered that the coating weight of the target coating zone is abnormal; if multiple consecutive coating weights of the target coating zone show a continuous increasing or decreasing trend, it is considered that the coating weight of the target coating zone is abnormal; or if multiple consecutive coating weights of the target coating zone show irregular oscillations, it is considered that the coating weight of the target coating zone is abnormal.

The coating method provided in the embodiments of this application improves the reliability of coating quality inspection by setting a preset alarm condition to determine whether an abnormality exists in the coating quality of the target coating zone.

According to some embodiments of this application, the coating method further includes: determining an adjustment parameter for the coating die based on the coating quality distribution map; and adjusting a posture of the coating die based on the adjustment parameter.

In some examples, coating quality is not only affected by the pressure exerted by the flow adjustment blocks of the coating die but may also be due to displacement of the coating die. In view of this, in some embodiments of this application, an adjustment parameter of the coating die is determined based on the coating quality distribution map.

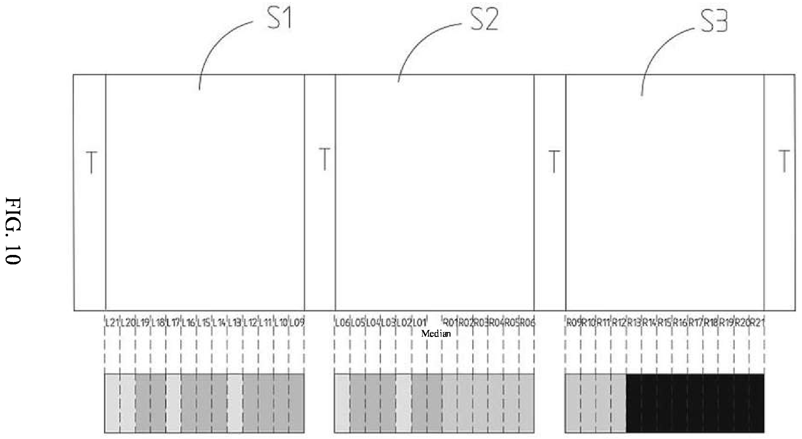

Referring to FIG. 10, FIG. 10 is a coating quality distribution map characterizing a lateral tilt of the coating die. From FIG. 10, it can be seen that in the first direction, from the target coating zone "L21" to the target coating zone "L01" to the target coating zone "R21," the coating weight variation trend is generally from heavy to light, indicating that the coating weight on the substrate exhibits a decreasing trend from left to right. This suggests that the coating die has experienced a lateral tilt. Thus, it can be determined that the adjustment parameter for the coating die is to change the lateral angle of the coating die.

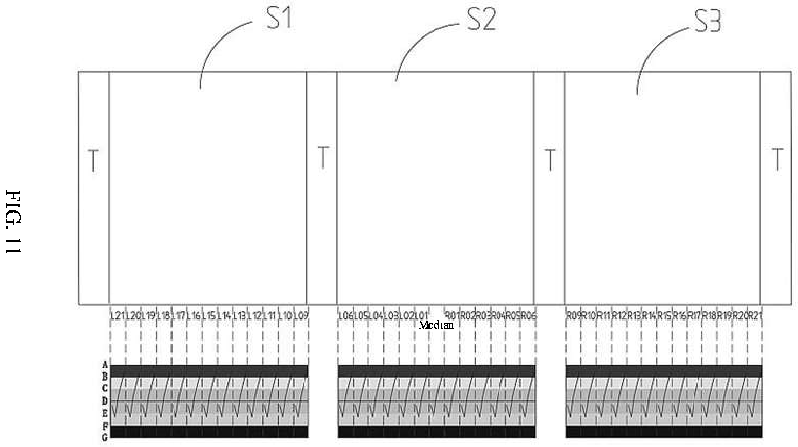

Referring to FIG. 11, FIG. 11 is a coating quality distribution map characterizing a longitudinal tilt of a coating die. From FIG. 11, it can be seen that each target coating zone exhibits a variation trend of "decreasing → increasing → increasing," and the coating weight within the target coating zone shows a clear stratification, indicating that the coating weight on the substrate has a gradually increasing trend in the longitudinal direction. This suggests that the coating die has experienced a longitudinal tilt. Thus, it can be determined that the adjustment parameter for the coating die is to change the longitudinal angle of the coating die.

In the coating method provided in the embodiments of this application, the adjustment parameter for the coating die is determined based on the coating quality distribution map, and the posture of the coating die is adjusted based on the adjustment parameter, enabling real-time monitoring of the position of the coating die to keep the coating die level, reducing the impact of non-coating factors on coating quality, and thereby improving the coating quality.

In the coating method of this example, the substrate passing through the coating die is divided into a plurality of target coating zones based on the position and the dimension in the first direction of the flow adjustment blocks, enabling matching between target coating zones and flow adjustment blocks. When a coating quality abnormality occurs in any target coating zone, the flow adjustment block corresponding to the abnormal position can be quickly located to correct the abnormality, improving the efficiency of the coating process. The generation of a coating quality distribution map characterizing different degrees of coating weight deviation for the target coating zones enables real-time monitoring of the coating quality of each target coating zone, improving the visualization of coating quality inspection. The generation of a coating quality distribution map characterizing the coating quality trend information of the target coating zones enables quality prediction for the coating quality of each target coating zone, improving the reliability of coating quality inspection.

The descriptions of the various embodiments above tend to emphasize the differences between the embodiments, and their similarities or commonalities can be referenced mutually. For brevity, details are not repeated herein.

In a specific example, a coating method is provided, which may include the following.

The coating die of the coating system shown in FIG. 1 or FIG. 5 is used to apply slurry onto a substrate, and the substrate passing through the coating die is divided into a plurality of target coating zones based on the position and dimension in the first direction of each flow adjustment block of the coating system, obtaining a schematic diagram of the partitioning of target coating zones shown in FIG. 7. As shown in FIG. 7, each target coating zone corresponds to one flow adjustment block, and each flow adjustment block has a corresponding code. With the code of the flow adjustment block used as the serial number of the corresponding target coating zone, the flow adjustment block with the same code can be quickly located based on the serial number of the target coating zone.

The detection apparatus 02 of the coating system shown in FIG. 5 is used to perform coating inspection on the coated substrate to obtain coating data, and the coating quality information of each target coating zone is determined based on the detected coating data of each target coating zone. This coating quality information can intuitively reflect the coating quality of the target coating zone, so that when an abnormality exists in the coating quality of any target coating zone, a flow adjustment block corresponding to that zone can be determined based on the position of the target coating zone, thereby enabling quick location of the abnormal coating zone and flow adjustment and improving the production efficiency of the coating process.

A coating weight deviation value of the target coating zone is obtained based on a preset target value and the slurry weight of each target coating zone, marker information of characterizing the degree of coating weight deviation for each target coating zone is determined based on the coating weight deviation value of the target coating zone, and a coating quality distribution map is generated and displayed based on the marker information corresponding to each target coating zone, where different degrees of coating weight deviation correspond to different marker information, and the coating quality distribution map includes each target coating zone annotated with the corresponding marker information. Referring to FIG. 8, real-time display of the coating quality distribution map enables working personnel to visually observe the coating quality information of each target coating zone. The degree of coating weight deviation includes any one of the following states indicating the coating quality of the target coating zone: overweight, slightly heavy, standard, slightly light, or ultralight. Different colors are used to display different degrees of coating weight deviation.

Five latest coating weight deviation values for the target coating zone are obtained from latest coating data of the target coating zone collected for 5 times, obtaining coating quality trend information, and this coating quality trend information is displayed through a coating quality distribution map. Referring to FIG. 9, a variation polyline characterizing the coating quality trend of the target coating zone is obtained from five coating weight deviation values of the target coating zone, and the variation polyline for each target coating zone is rendered in an image region of the coating partition map corresponding to each target coating zone to obtain the coating quality distribution map of the target coating zone. This enables prediction of the coating quality of the target coating zone, improving the reliability of coating quality inspection for the target coating zone.

An image region corresponding to each target coating zone in the coating partition map is divided into a plurality of quality gradient regions based on different control thresholds of slurry weight, and each quality gradient region is filled with a color corresponding to the quality gradient of the quality gradient region. Different control thresholds are shown in FIG. 9 as the upper specification line A, upper control line B, upper optimal line C, target value D, lower optimal line E, lower control line F, and lower specification line G. An image region corresponding to each target coating zone in the coating partition map can be divided into a plurality of quality gradient regions, and each quality gradient region is filled with a color corresponding to the quality gradient of the quality gradient region, enabling intuitive display of the coating quality trend of each target coating zone through real-time display of the coating partition map.

An adjustment parameter for the coating die is determined based on the coating quality distribution map, and the posture of the coating die is adjusted based on the adjustment parameter. From FIG. 10, it can be seen that in the first direction, from the target coating zone "L21" to the target coating zone "L01" to the target coating zone "R21," the coating weight variation trend is generally from heavy to light, indicating that the coating weight on the substrate exhibits a decreasing trend from left to right. This suggests that the coating die has experienced a lateral tilt. Thus, it can be determined that the adjustment parameter for the coating die is to change the lateral angle of the coating die.

From FIG. 11, it can be seen that each target coating zone exhibits a variation trend of "decreasing → increasing → increasing," and the coating weight within the target coating zone shows a clear stratification, indicating that the coating weight on the substrate has a gradually increasing trend in the longitudinal direction. This suggests that the coating die has experienced a longitudinal tilt. Thus, it can be determined that the adjustment parameter for the coating die is to change the longitudinal angle of the coating die. After the adjustment parameter for the coating die is determined, the posture of the coating die can be adjusted based on the adjustment parameter, enabling real-time monitoring of the position of the coating die to keep the coating die level, reducing the impact of non-coating factors on coating quality, and thereby improving coating quality.

The coating method of this example enables matching between the target coating zones and the flow adjustment blocks. When a coating quality abnormality occurs in any target coating zone, the flow adjustment block corresponding to the abnormal position can be quickly located to correct the abnormality, improving the efficiency of the coating process. Real-time monitoring of the coating quality of each target coating zone is achieved, and the visualization of coating quality inspection is improved. Quality prediction for the coating quality of each target coating zone is achieved, improving the reliability of coating quality inspection.

The descriptions of the various embodiments above tend to emphasize the differences between the embodiments, and their similarities or commonalities can be referenced mutually. For brevity, details are not repeated herein.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. Particularly, to the extent that no structural conflict exists, various technical features mentioned in various embodiments can be combined in any manner. This application is not limited to the specific embodiments disclosed herein, but includes all technical solutions falling within the scope of the claims.

## Claims

1. A coating system, wherein the coating system comprises a coating die, a detection apparatus, and a coating quality statistics apparatus; wherein
the coating die comprises a plurality of flow adjustment blocks, wherein the plurality of flow adjustment blocks have a same dimension in a first direction; and the first direction is a conveying direction of a substrate in the coating system;
a dimension of the flow adjustment block in the first direction is equal to a dimension of a detection light spot projected by the detection apparatus onto the substrate in the first direction;
the coating quality statistics apparatus comprises a statistics module, wherein the statistics module is configured to determine coating quality information of each target coating zone based on coating data of the target coating zone detected by the detection apparatus, the target coating zone comprising at least one coating zone on the substrate, and the coating data comprising a slurry weight in the target coating zone;
the statistics module is further configured to obtain a coating weight deviation value of the target coating zone based on a preset target value and the slurry weight in each target coating zone; and to determine the coating quality information of the target coating zone based on the coating weight deviation value of the target coating zone;
wherein the coating quality information comprises a coating quality distribution map, and the statistics module is further configured to determine, based on the coating weight deviation value corresponding to each target coating zone, marker information of characterizing a degree of coating weight deviation for each target coating zone, wherein different degrees of coating weight deviation correspond to different marker information; and to generate and display the coating quality distribution map based on the marker information corresponding to each target coating zone, wherein the coating quality distribution map comprises each target coating zone annotated with corresponding marker information.

2. The coating system according to claim 1, wherein the coating die further comprises a feed inlet, a first die, a second die, and a gasket; wherein
a cavity is formed between the first die and the second die, and the gasket is disposed within the cavity;
the plurality of flow adjustment blocks are arranged in an array on a side surface of the first die away from the second die, a first end of the flow adjustment blocks being in contact with the gasket; and
the feed inlet is in communication with the cavity.

3. The coating system according to claim 2, wherein the coating die further comprises flow adjustment mechanisms connected to the flow adjustment blocks; wherein
each flow adjustment mechanism corresponds to a flow adjustment block, and the flow adjustment mechanism is connected to a second end of its corresponding flow adjustment block.

4. The coating system according to any one of claims 1 to 3, wherein the coating quality statistics apparatus comprises:
a display module, wherein the display module is configured to display the coating quality information of the target coating zone.

5. The coating system according to any one of claims 1 to 4, wherein
the statistics module is further configured to determine a mapping position of each flow adjustment block on the substrate based on the position of each flow adjustment block of the coating die; and
to divide the substrate into a plurality of target coating zones based on the mapping position of each flow adjustment block on the substrate and a dimension of each flow adjustment block in the first direction.

6. The coating system according to any one of claims 1 to 5, wherein
the statistics module is further configured to, at a first mapping position on the substrate corresponding to a first flow adjustment block, define a first target coating zone corresponding to the first flow adjustment block, a width of the first target coating zone being equal to the dimension of the flow adjustment block in the first direction, and a length of the first target coating zone being equal to a dimension of the substrate in a second direction;
wherein the first flow adjustment block is any one of the flow adjustment blocks; and the second direction is a direction perpendicular to the first direction in the plane of the substrate.

7. A coating method applied to the coating system according to any one of claims 1 to 6, wherein the method comprises:
dividing a substrate passing through the coating die into a plurality of target coating zones based on a preset rule; and
determining coating quality information of each target coating zone based on detected coating data of each target coating zone.

8. The method according to claim 7, wherein the dividing the substrate passing through the coating die into a plurality of target coating zones based on a preset rule comprises:
dividing the substrate passing through the coating die into a plurality of target coating zones based on the position and the dimension in the first direction of each flow adjustment block.

9. The method according to claim 8, wherein the dividing the substrate passing through the coating die into a plurality of target coating zones based on the position and the dimension in the first direction of the flow adjustment block comprises:
determining a mapping position of each flow adjustment block on the substrate based on the position of each flow adjustment block; and
dividing the substrate into a plurality of target coating zones based on the mapping position of each flow adjustment block on the substrate and the dimension of each flow adjustment block in the first direction.

10. The method according to claim 9, wherein the dividing the substrate into a plurality of target coating zones based on the mapping position of each flow adjustment block on the substrate and the dimension of each flow adjustment block in the first direction comprises:
at a first mapping position on the substrate corresponding to a first flow adjustment block, defining a first target coating zone corresponding to the first flow adjustment block, a width of the first target coating zone being equal to the dimension of the flow adjustment block in the first direction, and a length of the first target coating zone being equal to a dimension of the substrate in a second direction;
wherein the first flow adjustment block is any one of the flow adjustment blocks; and the second direction is a direction perpendicular to the first direction in the plane of the substrate.

11. The method according to any one of claims 9 to 10, wherein the method comprises:
assigning a different code to each flow adjustment block;
assigning a different serial number to each target coating zone; and
storing a mapping relationship between the code of the flow adjustment block and the serial number of a corresponding target coating zone.

12. The method according to claim 11, wherein the assigning a different code to each flow adjustment block comprises:
determining a median flow adjustment block based on the position of each flow adjustment block, the median flow adjustment block being a flow adjustment block located at a middle position of all flow adjustment blocks arranged in an array; and
encoding the flow adjustment blocks along the first direction and a third direction, respectively, starting from the position of the median flow adjustment block, the third direction being an opposite direction of the first direction.

13. The method according to claim 11 or 12, wherein the method comprises:
determining a target coating zone with a coating quality abnormality based on the coating data of each target coating zone; and
determining a flow adjustment block to be adjusted based on the target coating zone with the coating quality abnormality.

14. The method according to claim 7, wherein the coating data comprises a slurry weight in the target coating zone, and the determining coating quality information of each target coating zone based on detected coating data of each target coating zone comprises:
obtaining a coating weight deviation value of the target coating zone based on a preset target value and the slurry weight in each target coating zone; and
determining the coating quality information of the target coating zone based on the coating weight deviation value of the target coating zone.

15. The method according to claim 14, wherein the coating quality information comprises a coating quality distribution map, and the determining the coating quality information of the target coating zone based on the coating weight deviation value of the target coating zone comprises:
determining, based on the coating weight deviation value corresponding to each target coating zone, marker information of characterizing a degree of coating weight deviation for each target coating zone; wherein different degrees of coating weight deviation correspond to different marker information; and
generating and displaying the coating quality distribution map based on the marker information corresponding to each target coating zone, wherein the coating quality distribution map comprises each target coating zone annotated with corresponding marker information.

16. The method according to claim 15, wherein the marker information is color marker information, and the generating the coating quality distribution map based on the marker information corresponding to each target coating zone comprises:
rendering a coating partition map based on position information of each target coating zone; and
filling, based on color marker information corresponding to each target coating zone, an image region of the coating partition map corresponding to each target coating zone with colors indicated by the corresponding color marker information, to obtain the coating quality distribution map.

17. The method according to claim 14, wherein the coating quality information comprises a coating quality distribution map, and the determining the coating quality information of the target coating zone based on the coating weight deviation value of the target coating zone comprises:
generating and displaying a coating quality distribution map of the target coating zone based on a plurality of coating weight deviation values of each target coating zone, the plurality of coating weight deviation values being obtained from latest coating data of the target coating zone collected for a preset number of times;
wherein the coating quality distribution map is used to characterize coating quality trend information of the target coating zone.

18. The method according to claim 17, wherein the generating the coating quality distribution map of the target coating zone based on a plurality of coating weight deviation values of each target coating zone comprises:
generating coating quality trend information of each target coating zone based on the plurality of coating weight deviation values of each target coating zone;
rendering a coating partition map based on position information of each target coating zone; and
annotating the coating quality trend information of each target coating zone in an image region of the coating partition map corresponding to each target coating zone to obtain the coating quality distribution map of the target coating zone.

19. The method according to claim 18, wherein the coating quality trend information comprises a variation polyline of the coating weight deviation values, and the annotating the coating quality trend information of each target coating zone in an image region of the coating partition map corresponding to each target coating zone to obtain the coating quality distribution map of the target coating zone comprises:
rendering a respective variation polyline for each target coating zone in an image region of the coating partition map corresponding to each target coating zone, to obtain the coating quality distribution map of the target coating zone.

20. The method according to claim 18 or 19, wherein the method further comprises:
dividing an image region corresponding to each target coating zone in the coating partition map into a plurality of quality gradient regions based on different control thresholds of slurry weight; and
filling each quality gradient region with a color corresponding to a quality gradient of the quality gradient region.

21. The method according to claim 20, wherein the method further comprises:
determining the presence of a coating quality abnormality in the target coating zone based on a preset alarm condition and a slurry weight in the target coating zone; and
outputting alarm information.

22. The method according to any one of claims 15 to 19, wherein the method comprises:
determining an adjustment parameter for the coating die based on the coating quality distribution map; and
adjusting a posture of the coating die based on the adjustment parameter.
